# FASCICULE DE BREVET EUROPEEN

(11) **EP 1 080 967 B1**
(45) Date de publication et mention de la délivrance du brevet: **04.10.2006**
(21) Numéro de dépôt: 00402402.2
(22) Date de dépôt: 31.08.2000
(51) Int. Cl.: B60J 10/00

(54) **Profilé d'étanchéité à section transversale en U, en élastomère ou en plastomère, dépourvu d'armature rigide**
Mit einer starren Armierung versehene U-förmige Profildichtung aus Elastomer oder Plastomer
U-shaped profile seal with a rigid reinforcement made of elastomer or plastomer

(30) Priorité: 01.09.1999 FR 9910966
(43) Date de publication de la demande: 07.03.2001
(73) Titulaire: Metzeler Automotive Profile Systems Transieres, 92000 Nanterre (FR)
(72) Inventeur: Dron, Bernard, 92800 Puteaux (FR); Hardy, Francis, 76520 Boos (FR)
(74) Mandataire: Jolly, Jean-Pierre

(56) Documents cités:
- DE-A- 4 441 852
- FR-A- 2 429 944
- FR-A- 2 633 361
- US-A- 4 443 508
- US-A- 5 636 895

## Description

La présente invention concerne un profilé d'étanchéité à section transversale en U, en élastomère ou en plastomère, dépourvu d'armature rigide, notamment d'armature métallique.

Elle a plus particulièrement pour objet un profilé formant pince de ce type, destiné à coiffer une partie saillante d'une structure, notamment un bord saillant d'un encadrement d'une ouverture de carrosserie d'un véhicule automobile, en particulier un encadrement de porte ou de coffre de cette carrosserie.

Les profilés à section en U de ce type coiffent le bord saillant ou la feuillure qu'ils équipent et les ailes de ce profilé correspondant aux branches du U comportent généralement des lèvres faisant saillie obliquement à partir de leur surface tournée vers l'autre aile en direction de celle-ci, en vue d'éviter une désolidarisation accidentelle du profilé et de la feuillure associée.

Dans le même but, les utilisateurs de ces profilés prévoient généralement de les rendre solidaires par collage des feuillures qu'ils équipent et, à cet effet, ils emploient habituellement des colles du type dit "hot melt", qui sont dures à la température ambiante, mais qui se ramollissent par chauffage. Ils doivent donc enduire sur place et à chaud la face interne de la base du profilé et la ou les parties contiguës des ailes d'une telle colle, puis coiffer la feuillure à équiper avec le profilé ainsi muni de colle, faire passer ensuite le véhicule dans une enceinte chaude, par exemple dans un tunnel de peinture, pour ramollir l'adhésif et lui permettre de fluer entre le profilé et la feuillure, et laisser enfin refroidir l'ensemble pour durcir l'adhésif et solidariser ainsi le profilé et la feuillure.

Ces opérations sont relativement banales, mais les utilisateurs déplorent cependant de devoir procéder eux-mêmes à l'enduction avec de l'adhésif de la partie interne du profilé et de ne pas disposer de profilés susceptibles d'être mis en place directement sur les feuillures associées, sans avoir recours à cette opération préalable fastidieuse.

On connaît aussi, par FR 2 633 361 A, un joint d'étanchéité selon le préambule de la revendication 1 en une matière souple extrudée, ayant une section transversale dont la forme générale est celle d'un U, dans le fond duquel est logée une substance adhésive telle qu'un mastic. Ce profilé est destiné à coiffer une feuillure ou un bord saillant, qui pénètre ainsi dans la substance adhésive, mais celle-ci durcit ensuite naturellement, en adhérant ainsi à la feuillure ou au bord saillant, ce qui peut nécessiter une durée considérable.

Le document FR-A1- 2 429 944 décrit un joint d'étanchéité en U destiné à être emboîté sur un rebord ou analogue, ce joint comprenant, au moins sur le côté intérieur de la section droite en U, un matériau sensible à la chaleur capable d'étancher l'intérieur du joint aux faces opposées du rebord sous l'effet d'une application de chaleur de l'extérieur au joint.

La présente invention vise à remédier à cet inconvénient en proposant un profilé à section en U de ce type général, dont au moins la base et les parties contiguës des ailes sont gainées de fabrication d'une couche d'une colle pâteuse apte à être durcie par une opération commandée de l'extérieur, permettant la mise en place directe de ce profilé sur la feuillure associée, suivie d'une activation de la colle pâteuse par chauffage afin de provoquer le durcissement de celle-ci.

L'invention a, par conséquent, pour objet un profilé d'étanchéité à section transversale en U, en élastomère ou en plastomère, dépourvu d'armature rigide à section en U noyée au moins partiellement dans sa masse, qui comporte, adhérant à la surface interne de la base du profilé et aux parties contiguës des ailes de celui-ci, un cordon d'une colle à l'état pâteux, ce profilé étant caractérisé en ce que la colle à l'état pâteux est apte à être durcie par une opération d'activation commandée, et en ce que chaque aile du profilé présente une partie faisant saillie vers l'intérieur de celui-ci et sur laquelle prend appui latéralement le cordon de colle.

L'invention a également pour objet un procédé de fixation d'un profilé du type défini ci-dessus sur une partie en saillie d'une structure, notamment sur un bord saillant d'un encadrement d'une ouverture d'une carrosserie d'un véhicule automobile, selon lequel on coiffe la partie en saillie avec le profilé de façon telle que cette partie en saillie pénètre dans le cordon de colle pâteuse, ce procédé étant caractérisé en ce que l'on procède ensuite à une opération d'activation de cette colle, apte à provoquer le durcissement de celle-ci.

Cette opération pourra consister, par exemple, à exercer une pression sur la colle, à la soumettre à des radiations appropriées ou encore à la soumettre à un chauffage.

Les colles pâteuses susceptibles d'être utilisées dans le cadre de l'invention sont usuelles dans la technique, où elles sont connues sous le nom de "colles structurales", et elles adhèrent en général aisément aux tôles peintes des carrosseries d'automobiles.

Afin de pouvoir être mis en place aisément sur le bord saillant qu'il équipe et conserver sa position en pinçant fermement ce bord saillant avant le durcissement du cordon de colle, le profilé a de préférence une section transversale en forme de Ω, c'est-à-dire que sa base tourne une surface convexe vers l'extérieur et qu'elle a une dimension transversale entre les parties opposées des ailes supérieure à l'écartement de ces ailes en leur emplacement le plus rapproché, à une certaine distance de la base, ces ailes s'écartant l'une de l'autre jusqu'à leur bord libre à partir de cet emplacement.

Le profilé peut être en toute matière élastomère ou thermoplastique, par exemple en E.P.D.M., en T.P.E. ou autre.

On notera que le cordon de colle durcie adhère généralement si fermement à une feuillure métallique qu'en cas de nécessité, on peut désolidariser le profilé de ce cordon, le profilé étant habituellement détruit par cette opération, alors que le cordon de colle durcie demeure en position sur la feuillure, où il peut être ultérieurement coiffé à nouveau d'un profilé analogue, mais dépourvu d'un cordon de colle pâteuse ou ne comportant qu'une mince pellicule d'une telle colle ou d'un mastic, en vue d'assurer l'étanchéité au fond du profilé.

D'autres caractéristiques et avantages de l'invention apparaîtront dans la description détaillée qui va suivre d'une forme de réalisation d'un tel profilé.

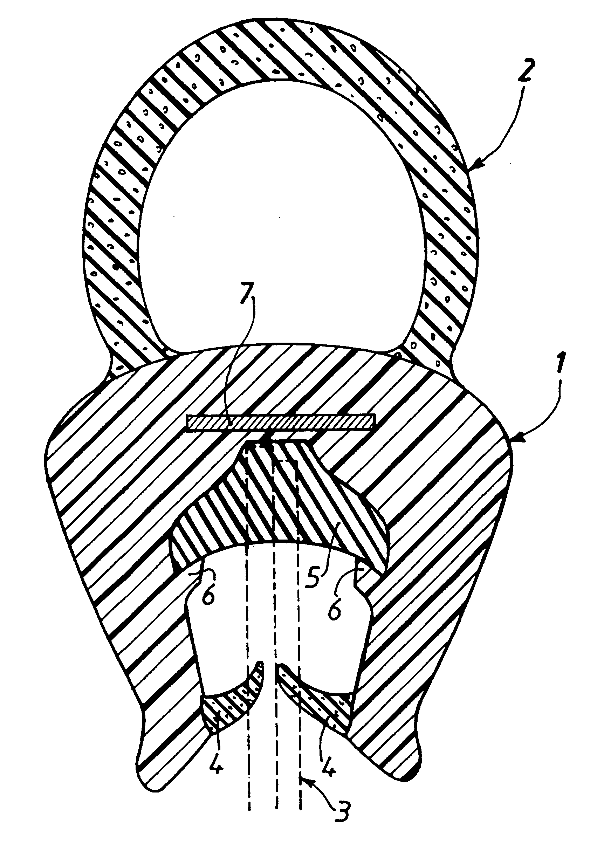

Dans cette description, on se réfèrera à la figure unique du dessin annexé, qui est une coupe transversale du profilé.

Le profilé 1 représenté sur le dessin a une section transversale ayant la forme générale d'un U et il est dépourvu de l'armature métallique pleine, ajourée ou à fil, également à section en U, qui est habituellement noyée au moins partiellement dans la masse des profilés de ce type.

Dans cette forme de réalisation, le profilé 1 comporte une base, dont la surface extérieure est convexe et à laquelle est attenant, ici, un profilé tubulaire 2 d'étanchéité. Le profilé 1 peut être, par exemple, en E.P.D.M. et le profilé 2 en caoutchouc cellulaire.

Le profilé 1 est destiné à coiffer et pincer une feuillure 3, par exemple un bord saillant d'un encadrement de porte ou de coffre d'une carrosserie d'automobile, et il comporte dans ce but, faisant saillie à partir de chaque aile, une lèvre souple 4 dirigée obliquement en direction de l'aile opposée et destinée à éviter une désolidarisation accidentelle du profilé 1 et de la feuillure 3.

Le profilé 1 est destiné à être collé sur la feuillure 3 qu'il coiffe et, dans ce but, un cordon 5 d'une colle pâteuse, apte à être durcie sous l'effet d'une activation commandée, est logé dans le fond du profilé tel qu'il est livré aux utilisateurs, ce cordon adhérant à la base et aux parties contiguës des ailes du profilé. Afin d'assurer le maintien en position du cordon de colle 5 au fond du profilé, chaque aile comporte une partie 6 faisant saillie en direction de l'autre aile et sur laquelle le cordon 5 prend appui latéralement.

Lors de la mise en place du profilé 1 sur la feuillure 3, la colle pâteuse flue naturellement entre la feuillure et les ailes du profilé, mais ceci n'a pas été reproduit sur le dessin, où le profilé est représenté sous la forme où il est livré aux utilisateurs. Il suffit ensuite de procéder à l'activation de cette colle pâteuse par un moyen approprié - pression, radiation, élévation de température ou autre - pour provoquer son durcissement et rendre ainsi parfaitement solidaires le profilé 1 et la feuillure 3.

Un conducteur électrique, constitué ici par un feuillard métallique 7, est noyé dans la base du profilé 1 et il suffit de connecter ses extrémités à une source de courant électrique pour provoquer le chauffage du cordon de colle 5 et le durcissement de celui-ci.

Du fait de son absence d'armature métallique en forme de U, le profilé 1 est sensiblement plus léger que les profilés de la technique antérieure. En revanche, il a moins tendance à pincer fermement la feuillure 3 et, par conséquent, à conserver la position qu'il occupe sur cette feuillure préalablement au durcissement du cordon de colle 5.

Pour remédier à cet inconvénient, conformément à la présente invention, le profilé 1 n'a pas une section transversale strictement en forme de U, mais plus précisément en forme de Ω, de manière que ses ailes, lorsqu'elles sont écartées de la feuillure qu'elles coiffent, aient tendance spontanément, par élasticité, à revenir pincer cette feuillure, même dans les parties fortement incurvées des encadrements qu'équipe le profilé.

Comme on le voit sur le dessin, cette forme générale en Ω entraîne que l'écartement des ailes du profilé, au niveau de leur raccordement à la base de celui-ci, est supérieur à l'écartement de ces mêmes ailes à l'emplacement où elles sont le plus rapprochées l'une de l'autre, à une certaine distance de la base du profilé, ces ailes divergeant ensuite l'une de l'autre, jusqu'à leur bord saillant libre le plus éloigné de la base.

Avantageusement, comme représenté sur le dessin, c'est au niveau où les ailes du profilé sont les plus proches l'une de l'autre que les lèvres souples 4 sont attenantes à ces ailes. Naturellement, des lèvres souples peuvent être aussi attenantes en d'autres positions aux ailes du profilé.

Le profilé conforme à l'invention, qui peut être livré aux utilisateurs prêt à être mis en place sur la feuillure 3 dont il doit être rendu solidaire par collage, est donc particulièrement avantageux.

Comme indiqué ci-dessus, le cordon 5 de colle durcie adhère très fermement à la feuillure 3, au point qu'il est possible, si nécessaire, de désolidariser le profilé 1 du cordon 5, qui demeure en position sur la feuillure. Le profilé est généralement endommagé par cette opération et est mis au rebut, mais il peut être remplacé par un profilé analogue, dépourvu de cordon de colle, qui peut venir coiffer le cordon 5 resté en position sur la feuillure, sur lequel il vient s'encliqueter par ses parties 6 en saillie. Afin d'assurer l'étanchéité, le nouveau profilé peut simplement comporter aux emplacements nécessaires une pellicule de colle ou de mastic, qui lui permet d'adhérer de façon étanche au cordon solidaire de la feuillure.

La forme de la partie de fond du profilé et, par conséquent, celle du cordon de colle pâteuse peut être absolument quelconque.

## Revendications

1. Profilé d'étanchéité à section transversale en U, en élastomère ou en plastomère, dépourvu d'armature rigide à section en U noyée au moins partiellement dans sa masse, qui comporte, adhérant à la surface interne de la base du profilé (1) et aux parties contiguës des ailes de celui-ci, un cordon d'une colle (5) à l'état pâteux, chaque aile du profilé (1) présentant une partie (6) faisant saillie vers l'intérieur de celui-ci et sur laquelle prend appui latéralement le cordon de colle (5), ce profilé étant **caractérisé en ce que** la colle à l'état pâteux est apte à être durcie par une opération d'activation commandée, et **en ce qu'**un conducteur électrique (7) est noyé dans la base du profilé (1), et qu'il est apte à ce que ses extrémités soient connectées à une source de courant électrique pour provoquer le chauffage et le durcissement du cordon de colle (5).

2. Profilé selon la revendication 1, **caractérisé en ce qu'**il a une section transversale en forme de Ω, c'est-à-dire que sa base tourne une surface convexe vers l'extérieur et qu'elle a une dimension transversale, entre les parties opposées des ailes, supérieure à l'écartement de ces ailes en leur emplacement le plus rapproché, ces ailes s'écartant l'une de l'autre jusqu'à leur bord libre à partir de cet emplacement.

3. Profilé selon la revendication 2, **caractérisé en ce qu'**une lèvre souple (4) fait saillie obliquement à partir d'au moins une aile de ce profilé en direction de l'autre aile, au niveau où les deux ailes sont les plus proches l'une de l'autre.

4. Procédé de fixation d'un profilé (1) selon l'une des revendications 1 à 3 sur une partie en saillie (3) d'une structure, notamment sur un bord saillant d'un encadrement d'une ouverture d'une carrosserie d'un véhicule automobile, selon lequel on coiffe la partie en saillie (3) avec le profilé (1) de façon telle que cette partie en saillie pénètre dans le cordon (5) de colle pâteuse, ce procédé étant **caractérisé en ce que** l'on procède ensuite à une opération d'activation de cette colle, apte à provoquer le durcissement de celle-ci.

5. Procédé de remplacement sur une partie en saillie (3) d'une structure, notamment sur un bord saillant d'un encadrement d'une ouverture d'une carrosserie d'un véhicule automobile, d'un profilé (1) selon la revendication 1, fixé sur cette structure (3) par un procédé selon la revendication 4, **caractérisé en ce que** l'on désolidarise le profilé (1) du cordon (5) de colle durcie sans séparer le cordon de la structure (3), au besoin en détruisant le profilé (1), et **en ce que** l'on coiffe le cordon (5) demeuré en place à l'aide d'un profilé analogue, mais dépourvu de cordon de colle ou ne comportant qu'une mince pellicule d'une telle colle ou d'un mastic, en vue d'assurer l'étanchéité du fond du profilé.

## Claims

1. Sealing profile of U-shaped cross section, made of elastomer or plastomer and devoid of a rigid reinforcement of U-shaped cross section embedded at least partially within its mass, which comprises, adhering to the inner surface of the base of the profile (1) and to the contiguous portions of the wings of this profile, a bead (5) of an adhesive in the pasty state, each wing of the profile (1) having a portion (6) projecting to the inside of this profile and on which the adhesive bead (5) bears laterally, this profile being **characterized in that** the adhesive in the pasty state is able to be cured by a controlled activation operation, and **in that** an electrical conductor (7) is embedded in the base of the profile (1) and is able to have its ends connected to an electrical current source in order to heat and cure the adhesive bead (5).

2. Profile according to Claim 1, **characterized in that** it has an Ω-shaped cross section, that is to say that its base describes an outwardly convex surface and that it has a transverse dimension between the opposed portions of the wings that is greater than the spacing of these wings at the point where they are closest together, these wings diverging down to their free edge from this point.

3. Profile according to Claim 2, **characterized in that** a flexible lip (4) projects obliquely from at least one wing of this profile in the direction of the other wing, at the location where the two wings are closest to one another.

4. Method of fastening a profile (1) according to one of Claims 1 to 3 on a projecting portion (3) of a structure, in particular on a projecting edge of a frame for an opening in a motor vehicle body, in which method the projecting portion (3) is covered with the profile (1) such that this projecting portion penetrates the bead (5) of pasty adhesive, this method being **characterized in that** there then follows an operation to activate this adhesive, capable of making it cure.

5. Method of replacing a profile (1) according to Claim 1 on a projecting portion (3) of a structure, in particular on a projecting edge of a frame for an opening in a motor vehicle body, this profile being fastened on this structure (3) by a method according to Claim 4, **characterized in that** the profile (1) is detached from the bead (5) of cured adhesive without separating the bead from the structure (3), if required by destroying the profile (1), and **in that** the bead (5) left in place is covered with the aid of an analogous profile, albeit one devoid of an adhesive bead or comprising only a thin film of such an adhesive or of a mastic, in order to provide sealing for the bottom of the profile.

## Patentansprüche

1. Dichtungsprofil mit U-förmigem Querschnitt aus Elastomer oder Plastomer, ohne eine zumindest teilweise in seine Masse eingelassene starre U-förmige Armierung, wobei das Dichtungsprofil an der Innenfläche der Basis des Profils (1) und an sich daran anschließenden Teilen der Flügel desselben anhaftend einen Klebstoffstrang (5) im pastenartigen Zustand umfasst, wobei jeder Flügel des Profils (1) einen Teil (6) aufweist, der in Richtung auf seine Innenseite vorspringt und an dem sich der Klebstoffstrang (5) seitlich abstützt, wobei das Profil **dadurch gekennzeichnet ist, dass** der Klebstoff im pastenartigen Zustand durch einen gesteuerten Vorgang härtbar ist und dass ein elektrischer Leiter (7) in die Basis des Profils (1) eingelassen ist und seine Enden an eine elektrische Stromquelle anschließbar sind, um die Erwärmung und die Härtung des Klebstoffstrangs (5) zu bewirken.

2. Profil nach Anspruch 1, **dadurch gekennzeichnet, dass** dieses einen Ω-förmigen Querschnitt hat, das heißt, dass seine Basis eine konvexe Fläche nach außen kehrt und dass sie zwischen den gegenüberliegenden Bereichen der Flügel eine transversale Dimension hat, die größer ist als der Abstand dieser Flügel an der Stelle ihrer größten Annäherung, wobei sich die Flügel ab dieser Stelle bis zu ihrem freien Rand voneinander entfernen.

3. Profil nach Anspruch 2, **dadurch gekennzeichnet, dass** eine nachgiebige Lippe (4) von zumindest einem Flügel dieses Profils in der Höhe, in der die beiden Flügel einander am nächsten liegen, in Richtung auf den anderen Flügel schräg vorspringt.

4. Verfahren zur Befestigung eines Profils (1) nach einem der Ansprüche 1 bis 3 an einem vorspringenden Bereich einer Konstruktion, insbesondere an einem vorspringenden Rand einer Öffnungsumrandung einer Kraftfahrzeugkarosserie, wonach der vorspringende Bereich (3) mit dem Profil (1) auf solche Weise bedeckt wird, dass dieser vorspringende Bereich in den pastenartigen Klebstoffstrang (5) eindringt, wobei das Verfahren **dadurch gekennzeichnet ist, dass** anschließend ein Vorgang zur Aktivierung dieses Klebstoffs durchgeführt wird, der geeignet ist, die Härtung desselben zu bewirken.

5. Verfahren zum Ersetzen eines durch ein Verfahren gemäß Anspruch 4 an einer Konstruktion (3) befestigten Profils (1) gemäß Anspruch 1 an einem vorspringenden Bereich (3) einer Konstruktion, insbesondere an einem vorspringenden Rand einer Öffnungsumrandung einer Kraftfahrzeugkarosserie, **dadurch gekennzeichnet, dass** das Profil (1) von dem gehärteten Klebstoffstrang (5) getrennt wird, ohne den Strang von der Konstruktion zu trennen, nötigenfalls unter Zerstörung des Profils (1), und dass der am Ort verbliebene Strang (5) mit Hilfe eines analogen Profils bedeckt wird, jedoch ohne Klebstoffstrang oder im Hinblick auf die Dichtigkeit des Bodens des Profils mit nur einem dünnen Film eines solchen Klebstoffs oder Kitts.
